# EUROPÄISCHE PATENTANMELDUNG

(11) **EP 4 631 867 A1**
(43) Veröffentlichungstag der Anmeldung: **15.10.2025**
(21) Anmeldenummer: 25168464.3
(22) Anmeldetag: 04.04.2025
(51) Int. Cl.: B64G 1/40, F02K 9/48

(54) **DRUCKBEAUFSCHLAGUNGSSYSTEM, RAUMFAHRZEUG UND VERFAHREN**

(30) Priorität: 10.04.2024 DE 102024110009
(71) Anmelder: ArianeGroup GmbH, 82024 Taufkirchen (DE)
(72) Erfinder: Hessel, Christian, 28199 Bremen (DE)
(74) Vertreter: Marschall, Stefan

(57) **Zusammenfassung**

Offenbart ist ein Druckbeaufschlagungssystem 100, 200, 300, 400 für ein Raumfahrzeug, das einen Brennstofftank 60, einen Oxidatortank 50 und eine Hilfseinheit aufweist. Die Hilfseinheit umfasst einen Hilfs-Oxidatortank 10, einen aus dem Hilfs-Oxidatortank gespeisten Hilfs-Gasgenerator 25 und eine an diesen angeschlossenen Hilfs-Turbine 26 und ist dazu eingerichtet, zumindest den Brennstofftank 60 hypergol, chemisch und/oder durch Verdampfung von Brennstoff mittels eines Wärmetauschers zu bedrücken.

Weiterhin offenbart sind ein Raumfahrzeug mit einem solchen Druckbeaufschlagungssystem und einer Hauptbrennkammer 1 und ein Verfahren eines Betriebs eines solchen Raumfahrzeugs.

## Beschreibung

Die vorliegende Erfindung betrifft ein Druckbeaufschlagungssystem für ein Raumfahrzeug. Darüber hinaus betrifft die Erfindung ein Raumfahrzeug mit einem solchen Druckbeaufschlagungssystem und einer durch sie gespeisten Hauptbrennkammer. Weiterhin betrifft die Erfindung ein Verfahren zum Betrieb eines Raumfahrzeugs mit einem solchen Druckbeaufschlagungssystem.

Zum Antrieb von Raumfahrzeugen sind Flüssigkeitstriebwerke bekannt, die mit einem Brennstoff und einem Oxidator als flüssige chemische Komponenten betrieben werden. Brennstoff und Oxidator, beispielsweise kryogener Wasserstoff und kryogener Sauerstoff, werden dabei in jeweiligen Tanks mitgeführt. Eine Druckbeaufschlagung der Tanks kann dabei konventionell mit einem Inertgassystem erfolgen, bei dem insbesondere Heliumgas unter hohem Druck mitgeführt und zur Wiederbedrückung der Tanks verwendet wird.

Zur Vermeidung der mit einer solchen Mitführung verbundenen Nachteile wie insbesondere der zusätzlichen Masse und der aus dem hohen Druck resultierenden Risiken wurden sogenannte "autogene" Druckbeaufschlagungssysteme entwickelt, bei denen zur Bedrückung der Brennstoff und/oder der Oxidator selbst verwendet werden.

Eine solche autogene Druckbeaufschlagung wird beispielsweise im Raketentriebwerk RD-0210 genutzt. Dabei wird ein Teil Oxidator in den Brennstofftank eingebracht und so eine hypergole chemische Reaktion hervorgerufen, die zu einer Gasgenerierung und einem Wärmeeintrag in den Tankgasleerraum führt und damit den Tankdruck bei der Entleerung des Brennstofftanks stabil hält. Analog wird in den Oxidatortank ein kleiner Teil Brennstoff eingebracht, die Reaktion verläuft hier brennstoffarm.

Die Druckschrift DE 2 241 383 A offenbart ein Flüssigkeitsraketentriebwerk der Hauptstrombauart. Aus der DE 10 2013 105 526 A1 ist ein Raumfahrtantrieb mit einer Startvorrichtung bekannt, die mindestens einen Druckbehälter für kryogenen Brennstoff oder kryogenen Oxidator umfasst.

Der vorliegenden Erfindung liegt die Aufgabe zugrunde, eine alternative Technik zur Tankbedrückung für Raumfahrzeuge bereitzustellen.

Die Aufgabe wird gelöst durch ein Druckbeaufschlagungssystem gemäß Anspruch 1, ein Raumfahrzeug gemäß Anspruch 7 und ein Verfahren gemäß Anspruch 8. Vorteilhafte Ausführungsformen sind in den Unteransprüchen, der Beschreibung und den Figuren offenbart.

Ein Druckbeaufschlagungssystem gemäß der vorliegenden Erfindung ist zur Verwendung in einem Raumfahrzeug vorgesehen. Es kann insbesondere Teil eines Haupttriebwerkssystems eines Raumfahrzeugs sein.

Das Druckbeaufschlagungssystem umfasst einen ersten Tank zur Aufnahme eines Brennstoffs und einen zweiten Tank zur Aufnahme eines Oxidators. Brennstoff und Oxidator sind vorzugsweise ISRU-kompatibel (also geeignet zur "In-Situ Resource Utilisation", d.h. zu einer Gewinnung, Verarbeitung und Nutzung auch jenseits der Erde) und/oder für einen wiederverwendenden Einsatz ausgelegt. Der Brennstoff kann dabei ein beliebiger flüssiger, lagerfähiger, insbesondere vorzugsweise ein nicht-kryogener Brennstoff sein, beispielsweise Ethanol oder Kerosin. Der Oxidator kann insbesondere vorzugsweise hochkonzentriertes Wasserstoffperoxid sein. Aufgrund der jeweiligen Funktion werden der erste Tank im Weiteren als "Brennstofftank" und der zweite Tank als "Oxidatortank" bezeichnet. Insbesondere können der Oxidatortank einen Oxidator und/oder der Brennstofftank einen Brennstoff (bereits) enthalten. Gemäß vorteilhaften Ausführungsformen sind der Brennstofftank und der Oxidatortank über ein Fördersystem mit einer Hauptbrennkammer des Raumfahrzeugs verbunden oder zu verbinden, so dass die Hauptbrennkammer (in deren befülltem Zustand) entsprechend mit Brennstoff und Oxidator aus den genannten Tanks zu betreiben ist. Insbesondere sind der Brennstofftank und der Oxidatortank vorzugsweise jeweils ein Haupttreibstoffbehälter des Raumfahrzeugs.

Das Druckbeaufschlagungssystem gemäß der vorliegenden Erfindung weist weiterhin eine Hilfseinheit mit einem Hilfstank, einem aus dem Hilfstank gespeisten Gasgenerator und einer an diesen angeschlossenen Turbine auf.

Der Hilfstank ist insbesondere dazu vorgesehen, Oxidator (beispielsweise bevorzugt hochkonzentriertes Wasserstoffperoxid) zu enthalten, und er wird daher im Folgenden als "Hilfs-Oxidatortank" bezeichnet. Gemäß speziellen Ausführungsformen kann der Hilfs-Oxidatortank einen/den Oxidator (bereits) enthalten. Vorzugsweise können der Oxidatortank und der Hilfs-Oxidatortank beide den gleichen Oxidator (derselben oder voneinander verschiedener Konzentration/en) enthalten oder entsprechend hierzu eingerichtet sein. Dies ermöglicht eine gleichartige Betankung und den Verzicht auf zusätzlichen direkten Treibstoff für den Hilfs-Oxidatortank.

Der Gasgenerator ist vorzugsweise dazu eingerichtet, die Turbine anzutreiben und/oder Teile eines Bedrückungsgases für den ersten und/oder zweiten Tank und/oder für den Hilfs-Oxidatortank zur Verfügung zu stellen. Insbesondere ist er vorzugsweise der Gasgenerator für den gesamten Zyklus. Der Gasgenerator kann vorzugsweise dazu dienen, den Oxidator aus dem Hilfstank (ohne Beigabe von Brennstoff) katalytisch oder thermolytisch zu zersetzen und damit hochenergetisches Abgas für die Turbine zu erzeugen.

Die Turbine gehört vorzugsweise zum Hauptantrieb, insbesondere kann sie die Turbine von Haupt-Pumpen an erstem bzw. zweitem Tank sowie einer (im Folgenden als "Hilfs-Pumpe" bezeichneten) Pumpe am Hilfstank sein. Ihre Leistung kann dabei über einen E-Generator an Elektromotoren der genannten Haupt- und Hilfs-Pumpen geleitet oder variabel mechanisch über eine Welle direkt an die Pumpen gegeben werden; als weitere alternative Möglichkeit kann die Turbine über eine Hauptwelle mit den Haupt-Pumpen und einem E-Generator verbunden sein, der einen Elektromotorantrieb der Hilfs-Pumpe speist.

Zur unmittelbaren Kennzeichnung der Verbindung zum Hilfstank und zur Unterscheidung von weiter unten genannten Komponenten werden (ungeachtet einer solchen möglichen Zugehörigkeit zum Hauptantrieb) der Gasgenerator der Hilfseinheit im Folgenden als "Hilfs-Gasgenerator" und die an ihn angeschlossene Turbine als "Hilfs-Turbine" bezeichnet.

Erfindungsgemäß ist die Hilfseinheit dazu eingerichtet, den Brennstofftank zu bedrücken.

Die Bedrückung kann dabei - als eine erste Möglichkeit - durch Zuführung von Oxidator aus dem Hilfs-Oxidatortank zum Brennstofftank hypergol erfolgen, insbesondere mittels einer so bewirkten brennstoffreichen In-Tank-Verbrennung.

Alternativ oder zusätzlich kann die Hilfseinheit dazu eingerichtet sein, den Brennstofftank chemisch zu bedrücken, indem sie einem dem Brennstofftank vorgeschalteten Gasgenerator Brennstoff aus dem Brennstofftank und Abgas der Hilfs-Turbine zuführt sowie Generatorgas, das infolgedessen im dem Brennstofftank vorgeschalteten Gasgenerator gebildet wird, in den Brennstofftank leitet. Der dem Brennstofftank vorgeschaltete Gasgenerator ist in diesem Fall vorzugsweise dazu eingerichtet, brennstoffreich betrieben zu werden.

Als eine weitere (zusätzliche oder alternative) Möglichkeit kann die Hilfseinheit dazu eingerichtet sein, als Bedrückungsgas Brennstoff zu verwenden, der in flüssiger Form aus dem Brennstofftank einem (dann vorzugsweise vom Druckbeaufschlagungssystem umfassten) Wärmetauscher zugeführt, darin verdampft und in gasförmigem Zustand als Bedrückungsgas wiederum in den Brennstofftank zurückgeführt wird. Die Verdampfung wird bei derartigen Ausführungsformen durch Abgas des Hilfs-Gasgenerators bewirkt, der dem Wärmetauscher zugeleitet und dessen Temperatur entsprechend genutzt wird. Das dem Wärmetauscher zugeführte genutzte Abgas kann dabei das gesamte vom Hilfs-Gasgenerator abgegebene Abgas oder nur ein Teil hiervon sein.

Das erfindungsgemäße Druckbeaufschlagungssystem ermöglicht somit eine hocheffiziente autogene Bedrückung des Brennstofftanks und eine vorteilhafte Nutzung von Abgas, das der Hilfs-Gasgenerator oder/und die Hilfs-Turbine im Betrieb abgibt und das im Folgenden auch als "Hilfs-Gasgenerator-Abgas" und "Hilfs-Turbinen-Abgas" bezeichnet wird.

Gemäß vorteilhaften Ausführungsformen ist die Hilfseinheit auch dazu eingerichtet, den Oxidatortank zu bedrücken, insbesondere unter Verwendung von Abgas der Hilfs-Turbine.

Beispielsweise kann die Hilfseinheit eines erfindungsgemäßen Druckbeaufschlagungssystems gemäß vorteilhaften Ausführungsformen dazu eingerichtet sein, den Oxidatortank durch Zuführung von Abgas der Hilfs-Turbine zu bedrücken.

Alternativ oder zusätzlich kann die Hilfseinheit dazu eingerichtet sein, den Oxidatortank durch Zuführung von sowohl Abgas aus der Hilfs-Turbine als auch Brennstoff aus dem Brennstofftank hypergol zu bedrücken, insbesondere mittels einer so bewirkten brennstoffarmen In-Tank-Verbrennung. Die Zuführung von Brennstoff kann dabei auch unterbrochen werden, indem die hypergole Bedrückung im Wechsel mit einer Bedrückung allein durch Abgas der Hilfs-Turbine als gestufte Bedrückung erfolgen kann.

Als weitere (zusätzliche oder alternative) Möglichkeit kann die Hilfseinheit eines erfindungsgemäßen Druckbeaufschlagungssystems dazu eingerichtet sein, den Oxidatortank chemisch zu bedrücken, indem einem ihm vorgeschalteten Gasgenerator Brennstoff aus dem Brennstofftank und Abgas der Hilfs-Turbine zugeführt sowie Generatorgas, das infolgedessen im dem Oxidatortank vorgeschalteten Gasgenerator gebildet wird, in den Oxidatortank geleitet wird. Der dem Oxidatortank vorgeschaltete Gasgenerator ist in diesem Fall vorzugsweise dazu eingerichtet, brennstoffarm betrieben zu werden.

In bevorzugten Ausführungsformen, in denen der Oxidator wie oben erwähnt hochkonzentriertes Wasserstoffperoxid ist, wird das Hilfs-Turbinen-Abgas durch dessen Zersetzungsprodukte Sauerstoff und Wasserdampf gebildet.

Insbesondere ist die Hilfseinheit vorzugsweise dazu eingerichtet, das Bedrücken von Brennstofftank und/oder Oxidatortank in Hauptantriebs- und/oder Wiederstartphasen des Raumfahrzeugs vorzunehmen.

Gemäß vorteilhaften Ausführungsformen ist die Hilfseinheit eines erfindungsgemäßen Druckbeaufschlagungssystems auch dazu eingerichtet, eine Lageregelung des Raumfahrzeugs vorzunehmen, beispielsweise in ballistischen Phasen, also bei inaktivem Haupttriebwerk des Raumfahrzeugs, insbesondere bei Orbitalmanövern.

Die Hilfseinheit derartiger Ausführungsformen eines derartigen Druckbeaufschlagungssystems vereint damit die Funktionen der Druckbeaufschlagung des Brennstofftanks (ggf. auch des Oxidatortanks) und einer Lageregelung auf sich. Insbesondere kann damit eine Wiederstartfähigkeit und/oder ein Power-Pack-Management unter Verzicht auf zusätzliche Treibstoffmanagementsysteme (wie beispielsweise variable Kammern, insbesondere Blasen (auch unter der englischen Bezeichnung "Bladder" bekannt oder Membranen) im Brennstoff- bzw. Oxidatortank gewährleistet werden, die das Absetzen des Treibstoffes am Auslass des jeweiligen Tanks bewirken sollen. Dies erlaubt eine besonders einfache und/oder eine an eine jeweilige Position bzw. benachbarte Komponenten angepasste Ausgestaltung des Brennstoff- und/oder des Oxidatortanks.

Insbesondere können der Brennstofftank und/oder der Oxidatortank vorzugsweise als Einkammertank (engl. "plain tank"), insbesondere blasen- und/oder membranfrei ausgebildet sein. Gemäß vorteilhaften Ausführungsformen ist/sind bzw. wird/werden der Brennstoff- und/oder der Oxidatortank mittels additiver Fertigung in einer jeweils vorteilhaften Form hergestellt.

Für die Lageregelung kann die Hilfseinheit in entsprechenden Ausführungsformen dazu eingerichtet sein, mindestens eine als Mono-Treibstoffdüse ausgebildete Steuerdüse mit flüssigem Oxidator aus dem Hilfs-Oxidatortank zu speisen. Die Steuerdüse kann dabei zum Druckbeaufschlagungssystem gehören oder durch entsprechende Leitungen mit ihm verbunden bzw. zu verbinden sein. Sie kann dazu eingerichtet sein, das Raumfahrzeug in ballistischen Phasen bzw. bei Orbitalmanövern auszurichten und/oder ein Absetzen im Brennstofftank und im Oxidatortank enthaltenen Brennstoffs bzw. Oxidators am jeweiligen Tankauslass zu bewirken, mit denen dann mindestens ein als Zweistoffdüse ausgebildetes Hilfstriebwerk zur Ausrichtung des Raumfahrzeugs zu betreiben sein kann.

Alternativ oder zusätzlich kann die Hilfseinheit eines erfindungsgemäßen Druckbeaufschlagungssystems dazu eingerichtet sein, zur Lageregelung des Raumfahrzeugs Abgas der Hilfs-Turbine einer/der in einem Mono-Treibstoffmodus zu betreibenden Hauptbrennkammer des Raumfahrzeugs zuzuführen. Durch den Betrieb der Hauptbrennkammer im Mono-Treibstoffmodus mit dem zugeführten Hilfs-Turbinen-Abgas kann dann ein Absetzen von im Brennstofftank und im Oxidatortank enthaltenem Brennstoff bzw. Oxidator einem jeweiligen Tankauslass bewirkt und so ermöglicht werden, dass mindestens ein als Zweistoffdüse ausgebildetes Hilfstriebwerk zu betreiben ist, mit dem das Raumfahrzeug in ballistischen Phasen bzw. bei Orbitalmanövern ausgerichtet werden kann.

Das mindestens eine Hilfstriebwerk kann bei den genannten Ausführungsformen zum Druckbeaufschlagungssystem gehören oder durch entsprechende Leitungen mit ihm verbunden bzw. zu verbinden sein.

Insbesondere kann somit Oxidator aus dem Hilfs-Oxidatortank als Ein-Stoff für Ein-Stoff-Lagetriebwerke und/oder als Oxidatoranteil eines Zwei-Stoff-Hilfstriebwerks dienen. Alternativ oder zusätzlich fungiert Oxidator aus dem Hilfs-Oxidatortank vorzugsweise als Arbeitsgas für eine Hilfs-Pumpe am Hilfs-Oxidatortank, den Hilfs-Gasgenerator und die Hilfs-Turbine und/oder als Ein-Stoff zur Speisung des Hilfs-Gasgenerators mittels einer/der diesem vorgelagerten, zwischen Hilfs-Oxidatortank und Hilfs-Gasgenerator angeordneten Hilfs-Pumpe. Das resultierende, im Hilfs-Gasgenerator erzeugte Arbeitsgas kann vorzugsweise der Hilfs-Turbine zugeführt werden und treibt dann den Zyklus an. Alternativ oder zusätzlich können Teile des Abgases der Hilfs-Turbine für die Bedrückung des Oxidatortanks, des Brennstofftanks und/oder des Hilfs-Tanks genutzt werden.

Der Hilfs-Oxidatortank ist gemäß vorteilhaften Ausführungsformen ein Blasen- oder Membrantank. Damit kann der (bei seiner Verwendung) in ihm enthaltene flüssige Oxidator auch in ballistischen Phasen bzw. bei Orbitalmanövern jeweils zum Tankausgang des Hilfs-Oxidatortank getrieben werden.

Die Hilfseinheit kann dazu eingerichtet sein, den Hilfs-Oxidatortank mittels zumindest eines Teils des Hilfs-Turbinen-Abgases und/oder während einer Antriebsphase mit Oxidator aus dem Oxidatortank zu bedrücken. Alternativ oder zusätzlich kann die Hilfseinheit zu einer (bevorzugt druckgas- und/oder blowdown-geregelten) Bedrückung des Hilfs-Oxidatortanks mittels eines vorbedrückten (vorzugsweise ISRUkompatiblen) Lagergastanks eingerichtet sein, der dann vorzugsweise zum Hilfseinheit gehören oder mit ihm zu verbinden sein kann. Ein solcher Lagergastank kann beispielsweise ein Sauerstofftank sein; dies ist insbesondere vorteilhaft, wenn für das Raumfahrzeug ein Mitführen von Sauerstoff für eine Lebenserhaltung an Bord vorgesehen ist.

Gemäß vorteilhaften Ausführungsformen weist der Hilfs-Oxidatortank ein Tankvolumen auf, kleiner ist als ein Tankvolumen des Brennstoff- und/oder ein Tankvolumen des Oxidatortanks. Es kann beispielsweise höchstens ein Zehntel oder höchstens ein Fünfzigstel oder höchstens ein Hundertstel eines Tankvolumens des Brennstofftanks und/oder eines Tankvolumens des Oxidatortanks betragen. Ein solcher Hilfs-Oxidatortank ist besonders raumsparend und somit besonders vorteilhaft im Raumfahrzeug zu installieren.

Vorzugsweise ist der Hilfs-Oxidatortank als ein Mitteldrucktank ausgebildet. Insbesondere kann er bevorzugt für einen Nenndruck (bezogen auf eine Temperatur von 20°C) von 15 bis 30 bar ausgelegt sein. Der Brennstofftank und/oder der Oxidatortank kann/können vorzugsweise als Niederdrucktank/s ausgebildet, insbesondere für einen Nenndruck (bezogen auf 20°C) von 1 bis 5 bar ausgelegt sein.

Ein erfindungsgemäßes Raumfahrzeug umfasst ein erfindungsgemäßes Druckbeaufschlagungssystem sowie eine Hauptbrennkammer, die durch den Brennstofftank und den Oxidatortank des Druckbeaufschlagungssystems gespeist wird.

Ein erfindungsgemäßes Verfahren betrifft einen Betrieb eines Raumfahrzeugs, das ein erfindungsgemäßes Druckbeaufschlagungssystem aufweist. Das Verfahren umfasst ein Bedrücken des Brennstofftanks und/oder des Oxidatortanks des Druckbeaufschlagungssystems mittels dessen Hilfseinheit, vorzugsweise während mindestens einer Antriebsphase.

In den verschiedenen Ausführungsformen des Druckbeaufschlagungssystems kann das Verfahren ein Durchführen einer oder mehrerer Aktionen umfassen, zu denen die jeweiligen Komponenten des Druckbeaufschlagungssystems wie in dieser Schrift angegeben eingerichtet und damit geeignet sind.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es versteht sich, dass reale Größenverhältnisse von den dargestellten abweichen können.

Es zeigen schematisch:
- Figur 1:: eine Antriebseinheit eines Raumfahrzeugs mit einer exemplarischen Ausführungsform eines erfindungsgemäßen Druckbeaufschlagungssystems zur hypergolen Bedrückung des Brennstofftanks;
- Figur 2:: eine Antriebseinheit eines Raumfahrzeugs mit einer exemplarischen Ausführungsform eines erfindungsgemäßen Druckbeaufschlagungssystems zur chemischen Bedrückung des Brennstofftanks;
- Figur 3:: eine Antriebseinheit eines Raumfahrzeugs mit einer exemplarischen Ausführungsform eines erfindungsgemäßen Druckbeaufschlagungssystems zur chemischen Bedrückung des Brennstoff- und des Oxidatortanks; und
- Figur 4:: eine Antriebseinheit eines Raumfahrzeugs mit einer exemplarischen Ausführungsform eines erfindungsgemäßen Druckbeaufschlagungssystems zur Bedrückung des Brennstofftanks mittels eines Wärmetauschers.

Die Figuren zeigen jeweils eine Antriebseinheit eines Raumfahrzeugs mit einer Hauptbrennkammer 1, einer Düse 2, einem Oxidator-Triebwerkshauptventil 31, einem Brennstoff-Triebwerkshauptventil 32, einem Hilfsantrieb-Triebwerksventil 33 sowie einem jeweiligen autogenen Druckbeaufschlagungssystem 100, 200, 300 bzw. 400 gemäß Ausführungsformen der vorliegenden Erfindung.

Die Druckbeaufschlagungssysteme 100, 200, 300 bzw. 400 umfassen dabei jeweils einen Oxidatortank 50 und einen Brennstofftank 60 sowie eine Hilfseinheit mit einem Hilfs-Oxidatortank 10, einer Hilfs-Pumpe 20 (die beispielsweise als Elektropumpe ausgebildet sein kann), einem Hilfspumpenhauptventil 21, einem Hilfsgasgeneratorregelventil 22, einem aus dem Hilfs-Oxidatortank 10 gespeisten Hilfs-Gasgenerator 25 und einer an diesen angeschlossenen Hilfs-Turbine 26.

Der Brennstofftank 60 umfasst jeweils einen flüssigen Brennstoff 4 wie beispielsweise Ethanol oder Kerosin sowie ein einen zugehörigen Gasraum 8 des Brennstofftanks 60. Der Oxidatortank 50 enthält einen flüssigen Oxidator 3 und einen zugehörigen Gasraum 7 des Oxidatortanks 50. Gemäß bevorzugten Ausführungsformen ist der Oxidator hochkonzentriertes Wasserstoffperoxid. Zur deutlicheren Abgrenzung von der Hilfseinheit werden der Brennstofftank 60 hier auch als "Haupt-Brennstofftank", der darin enthaltene Brennstoff 4 als "Haupt-Brennstoff", der Oxidatortank 50 als "Haupt-Oxidatortank" und der darin enthaltene Oxidator als "Haupt-Oxidator" bezeichnet.

Der Hilfs-Oxidatortank 10 ist kleiner als der Oxidatortank 50 und enthält ebenfalls einen flüssigen Oxidator 13 sowie einen zugehörigen Gasraum 11 des Hilfs-Oxidatortanks 10. Vorzugsweise stimmt der (zur Abgrenzung hier auch als "Hilfs-Oxidator" bezeichnete) Oxidator 13 im Hilfs-Oxidatortank 10 zumindest bis auf eine jeweilige Konzentration mit dem Haupt-Oxidator 3 im Oxidatortank 50 überein, insbesondere ist er bevorzugt ebenfalls Wasserstoffperoxid.

Der Oxidatortank 50 und der Brennstofftank 60 sind vorliegend jeweils als Plain-Treibstoffbehälter bzw. Einkammertanks, insbesondere membran- und blasenfrei ausgebildet. Demgegenüber weist der Hilfs-Oxidatortank 10 eine Blase 12 auf, die den flüssigen Oxidator 13 vom Gasraum 11 des Hilfs-Oxidatortanks 10 trennt und dazu dient, den flüssigen Oxidator am Auslass des Hilfs-Oxidatortanks 10 abzusetzen.

Der Oxidatortank 50 und der Brennstofftank 60 sind ferner jeweils als Niederdrucktanks ausgebildet (nicht sichtbar). Eine Druckerhöhung, die bezogen auf eine Entnahmerichtung hinter diesen Tanks erfolgt, wird durch eine ("Haupt-")Pumpe 5 für den Haupt-Oxidator 3 bzw. eine ("Haupt-") Pumpe 6 für den Brennstoff 4 erzeugt. Diese Haupt-Pumpen 5, 6 können vorzugsweise direkt oder indirekt durch die Hilfsturbine 26 angetrieben werden (nicht sichtbar).

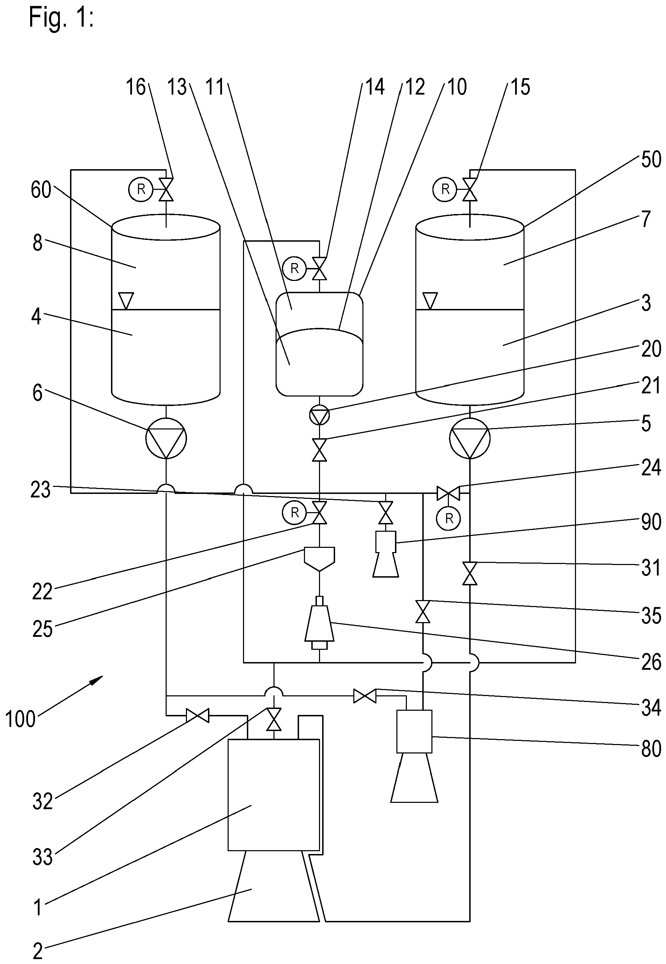

Die Hilfseinheit dient bei den in den Figuren 1 bis 4 gezeigten Druckbeaufschlagungssystemen 100, 200, 300 bzw. 400 vorteilhaft dem Management der orbitalen Phasen, dem Betrieb des Zyklus und der Lageregelung des Raumfahrzeugs.

Die Hilfs-Turbine 26 ist vorliegend die Turbine des Hauptantriebs und damit der Haupt-Pumpen 5, 6 sowie der Hilfs-Pumpe 20. Ihre Leistung kann vorzugsweise über einen E-Generator an Elektromotoren der genannten Pumpen 5, 6, 20 geleitet oder variabel mechanisch über eine Welle direkt an die Pumpen 5, 6, 20 gegeben werden; als weitere alternative Möglichkeit kann die Hilfs-Turbine 26 über eine Hauptwelle mit den Haupt-Pumpen 5, 6 und einem E-Generator verbunden sein, der einen Elektromotorantrieb der Hilfs-Pumpe 20 speist (jeweils nicht dargestellt).

Der Hilfs-Gasgenerator 25 ist dazu eingerichtet, die Hilfs-Turbine 26 anzutreiben und Teile des Bedrückungsgases zur Verfügung zu stellen. Insbesondere ist er der Gasgenerator für den gesamten Zyklus.

Für das Druckbeaufschlagungssystem 100 gemäß der Figur 1 ist eine Bedrückung von Haupt-Oxidatortank 50 und Haupt-Brennstofftank 60 wie folgt vorgesehen:
Zur Bedrückung des Haupt-Oxidatortanks 50 wird von der Hilfs-Turbine 26 abgegebenes Hilfs-Turbinen-Abgas (das im Fall von Wasserstoffperoxid als Hilfs-Oxidator 13 aus dessen Zersetzungsprodukten Wasserdampf und Sauerstoff besteht) zum Teil durch eine Tankbedrückungsregeleinheit 15 dem Oxidatortank 50, insbesondere dessen Gasraum 7 des Oxidatortanks 50 zugeführt.

Darüber hinaus wird Hilfs-Oxidator 13 aus dem Hilfs-Oxidatortank 10 über eine Tankbedrückungsregeleinheit 16 des Brennstofftanks 60 flüssig in dessen Gasraum 8 geführt. Auf diese Weise wird der Brennstofftank 60 mittels einer brennstoffreichen In-Tank-Verbrennung hypergol bedrückt.

Zur Bedrückung des Hilfs-Oxidatortanks 10 wird beim in der Figur 1 gezeigten Druckbeaufschlagungssystem 100 Hilfs-Turbinen-Abgas aus der Hilfs-Turbine 26 durch eine Bedrückungsregeleinheit 14 des Hilfs-Oxidatortanks 10 hindurch in dessen Gasraum 11 geleitet. Insbesondere erfolgt die Bedrückung des Hilfs-Oxidatortanks 10 in diesem Fall also autogen.

In alternativen (nicht dargestellten) Ausführungsformen kann die Bedrückung des Hilfs-Oxidatortanks 10 aus einem vorbedrückten Lagergastank erfolgen. Die Bedrückung erfolgt dann vorzugsweise druckgas- oder blowdown-geregelt. Das im Lagergastank enthaltene Lagergas ist vorzugsweise ISRU-kompatibel. Es kann beispielsweise Sauerstoff sein; dies ist insbesondere vorteilhaft, wenn das Raumfahrzeug Sauerstoff für eine Lebenserhaltung an Bord mitführt.

Als weitere Möglichkeit kann der Hilfs-Oxidatortank 10 während einer Antriebsphase mit Oxidator aus dem Oxidatortank 50 wiederaufladbar sein, insbesondere mittels der (Haupt-)Pumpe 5 für den Haupt-Oxidator 3 und einem Hilfstankwiederaufladungs- und Hauptantriebsregelventil 24.

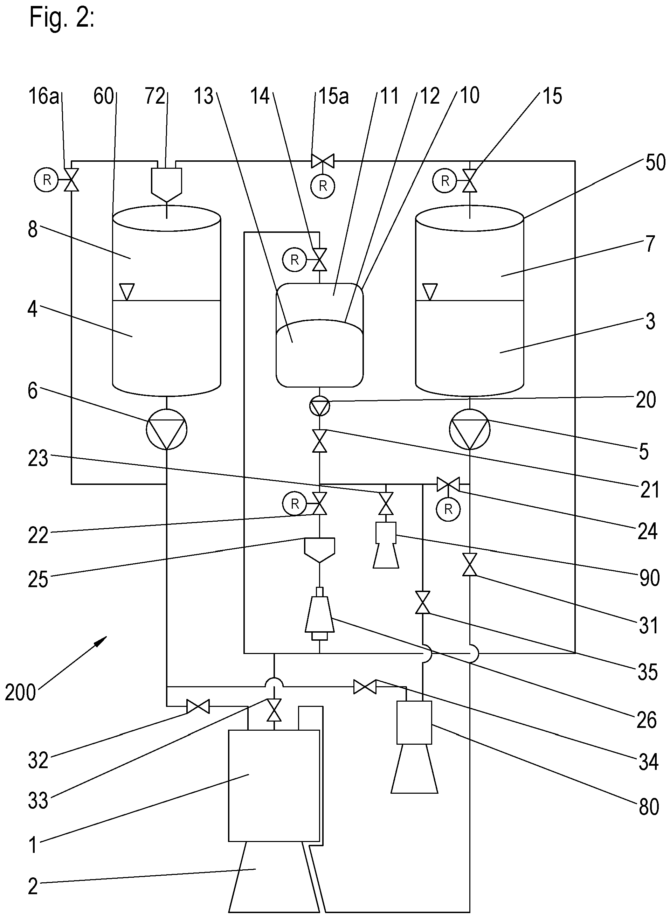

Bei der in der Figur 2 gezeigten Antriebseinheit erfolgt eine Bedrückung des Oxidatortanks 50 dadurch, dass von der Hilfs-Turbine 26 abgegebenes Hilfs-Turbinen-Abgas zum Teil durch eine Tankbedrückungsregeleinheit 15 dem Oxidatortank 50, insbesondere dessen Gasraum 7 des Oxidatortanks 50 zugeführt wird.

Ein weiterer Teil des Abgases der Hilfs-Turbine 26 wird durch eine für die Brennstofftankbedrückung vorgesehene Oxidator-Gasgeneratorregeleinheit 15a hindurch einem dem Brennstofftank 60 vorgeschalteten Gasgenerator 72 zugeführt und dort zusammen mit Brennstoff, der aus dem Brennstofftank 60 abgezapft und dem Gasgenerator 72 durch eine Brennstoff-Gasgeneratorregeleinheit 16a für flüssigen Brennstoff zugeführt wurde, brennstoffreich verbrannt.

Der Brennstofftank 60 wird dann mittels Generatorgases aus dem Gasgenerator 72 bedrückt. Insbesondere erfolgt die Bedrückung des Brennstofftanks 60 bei dem in der Figur 2 gezeigten Ausführungsformen somit chemisch.

Eine Bedrückung des Hilfs-Oxidatortanks 10 erfolgt beim in der Figur 2 gezeigten Druckbeaufschlagungssystem 200 wie oben mit Bezug zum Druckbeaufschlagungssystem 100 der Figur 1 beschrieben, alternativ könnte die Bedrückung des Hilfs-Oxidatortanks 10 auch hier aus einem vorbedrückten Lagergastank vorgenommen werden (nicht dargestellt).

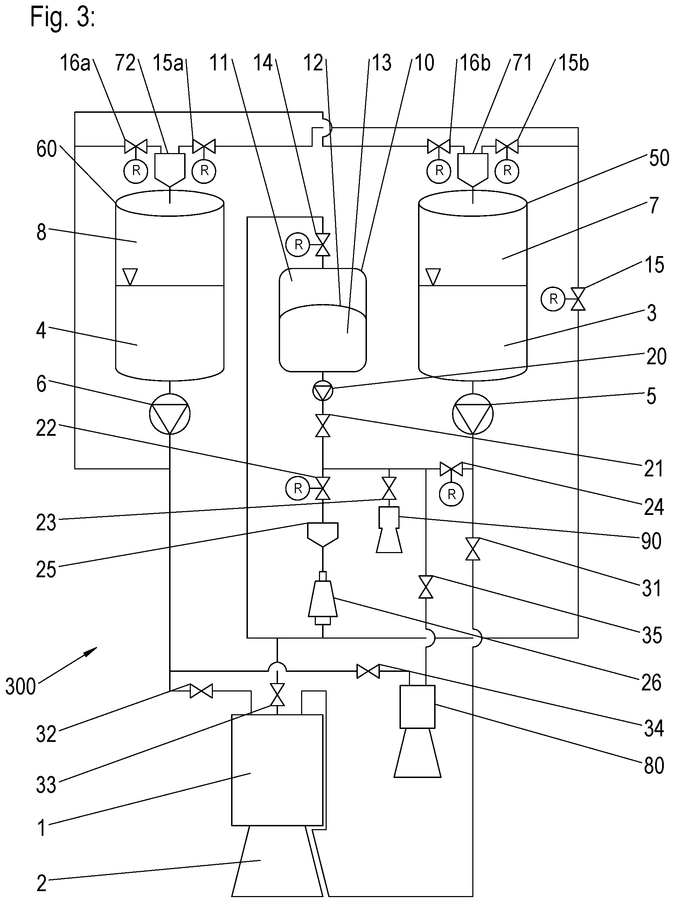

Bei der in der Figur 3 dargestellten Antriebseinheit erfolgt eine Bedrückung des Brennstofftanks 60 wie oben mit Bezug auf die Figur 2 beschrieben.

Der Oxidatortank 50 wird bei den Druckbeaufschlagungssystemen 300 ebenfalls chemisch bedrückt. Dazu wird ein Teil des Hilfs-Turbinen-Abgases, nachdem er die Tankbedrückungsregeleinheit 15 des Oxidatortanks 50 passiert hat, durch eine Oxidator-Gasgeneratorregeleinheit 15b hindurch einem dem Oxidatortank 50 vorgeschalteten Gasgenerator 71 zugeführt und dort zusammen mit Brennstoff, der aus dem Brennstofftank 60 abgezapft und durch die Brennstoff-Gasgeneratorregeleinheit 16b für flüssigen Brennstoff hindurch dem Gasgenerator 71 zugeführt wurde, brennstoffarm verbrannt. Der Oxidatortank 50 wird dann mittels Generatorgases aus dem ihm vorgeschalteten Gasgenerator 71 bedrückt.

Die Bedrückung des Hilfs-Oxidatortanks 10 erfolgt beim in der Figur 3 verdeutlichten Druckbeaufschlagungssystem 300 wie bei den in den Figuren 1 und 2 gezeigten Ausführungsformen, alternativ könnte sie auch hier aus einem vorbedrückten Lagergastank vorgenommen werden (nicht dargestellt).

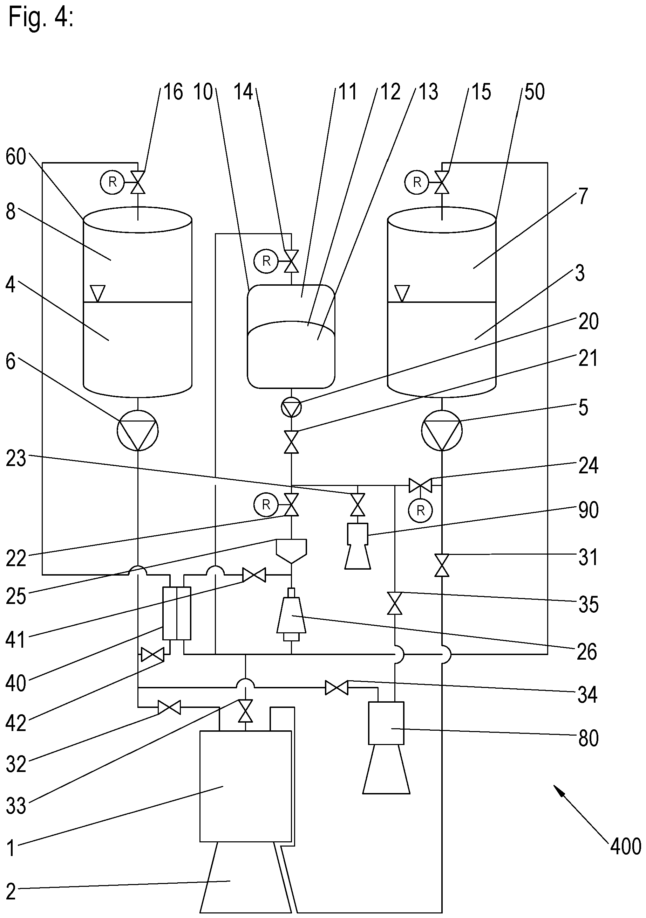

Bei der Antriebseinheit gemäß der Figur 4 erfolgt (ähnlich der Figur 2) eine Bedrückung des Oxidatortanks 50 zum einen dadurch, dass von der Hilfs-Turbine 26 abgegebenes Hilfs-Turbinen-Abgas zum Teil durch eine Tankbedrückungsregeleinheit 15 dem Oxidatortank 50, insbesondere dessen Gasraum 7 des Oxidatortanks 30 zugeführt wird. Zum anderen wird ein Teil des Abgases des Hilfs-Gasgenerators 25 durch ein Heißgashauptventil 41 und einen Wärmetauscher 40 geführt, von dem er wiederum durch die Tankbedrückungsregeleinheit 15 dem Oxidatortank 50 zugeleitet wird, dessen Bedrückung der genannte Teil des Abgases damit ebenfalls dient.

Die Bedrückung des Brennstofftanks 60 erfolgt beim in der Figur 4 gezeigten Druckbeaufschlagungssystem 400, indem flüssiger Brennstoff aus dem Brennstofftank 60 durch ein Verdampferhauptventil 42 hindurch ebenfalls dem Wärmetauscher 40 zugeführt, dort unter Ausnutzung der Temperatur des aus dem Hilfs-Gasgenerators 25 zugeleiteten Abgases verdampft und im gasförmigen Zustand wieder in den Brennstofftank zurückgeführt wird.

Für eine Schuberzeugung durch die in den Figuren 1 - 4 gezeigten Antriebseinheiten werden in einer Hauptantriebsphase des Raumfahrzeugs der Haupt-Oxidator 3, der Brennstoff 4 sowie von der Hilfs-Turbine 26 abgegebenes Hilfs-Turbinen-Abgas der Hauptbrennkammer 1 zugeführt und dort zusammen verbrannt. Die Zuführung erfolgt dabei für den Haupt-Oxidator 3 mittels der Haupt-Pumpe 5 und durch das Oxidator-Triebwerkshauptventil 31 hindurch, für den Brennstoff 4 mittels der Haupt-Pumpe 6 und durch das Brennstoff-Triebwerkshauptventil 32 hindurch sowie für das Hilfs-Turbinen-Abgas durch das Hilfsantrieb-Triebwerksventil 33 hindurch. Bei der gemeinsamen Verbrennung erfolgt die Expansion des Verbrennungsgases mittels der Düse 2.

Zur Lageregelung wird mindestens eine Steuerdüse 90 als Mono-Treibstoffschubdüse betrieben, die vom Hilfs-Oxidatortank 10 druckgasgefördert durch ein Hauptventil 23 hindurch mit flüssigem Hilfs-Oxidator 13 gespeist wird. Die Speisung kann auch bei Schwerelosigkeit erfolgen, weil die Blase 12 des Hilfs-Oxidatortanks 10 den darin enthaltenen Oxidator 13 zum Tankauslass treibt.

Zudem können bei den in den Figuren dargestellten Ausführungsformen Orbitalmanöver mittels als Zweistoffschubdüsen ausgebildeten Hilfstriebwerken 80 vorgenommen werden, die durch ein Brennstoff-AUX-Hauptventil 34 hindurch mit Brennstoff 4 aus dem Brennstofftank 60 sowie durch ein Oxidator-AUX-Hauptventil 35 hindurch mit Hilfs-Oxidator 13 aus dem Hilf-Oxidatortank 10 betrieben werden. Ein dazu erforderliches Absetzen von Brennstoff 4 am Tankauslass des Brennstofftanks 40 kann mittels der Steuerdüsen 90 bewirkt werden oder über einen Mono-Treibstoff-Modus (Mono-Idle Mode) der Hauptbrennkammer 1, indem dieser Abgas der Hilfs-Turbine zugeführt wird, ohne dass sie mit Brennstoff 4 versorgt und gezündet wird.

Insbesondere dient bei den dargestellten Ausführungsformen Oxidator 13 aus dem Hilfs-Oxidatortank als Ein-Stoff der Steuerdüsen 90, als Oxidatoranteil der Zweistoff-Hilfstriebwerke 80 und als Arbeitsgas für eine Hilfs-Pumpe 20 am Hilfs-Oxidatortank 10, den Hilfs-Gasgenerator 25 und die Hilfs-Turbine 26.

Zusätzlich fungiert der Oxidator 13 aus dem Hilfs-Oxidatortank 10 vorliegend vorzugsweise als Ein-Stoff zur Speisung des Hilfs-Gasgenerators 25 mittels der diesem vorgelagerten, zwischen Hilfs-Oxidatortank 10 und Hilfs-Gasgenerator 25 angeordneten Hilfs-Pumpe 20. Das resultierende, im Hilfs-Gasgenerator 25 erzeugte Arbeitsgas wird der Hilfs-Turbine 26 zugeführt und treibt den Zyklus an. Wie aus den Figuren ersichtlich, werden bei den jeweils dargestellten Ausführungsformen zudem Teile des Abgases der Hilfs-Turbine 26 für die Bedrückung des Oxidatortanks 50, des Brennstofftanks 60 und/oder des Hilfs-Tanks 10 genutzt.

Offenbart ist ein Druckbeaufschlagungssystem 100, 200, 300, 400 für ein Raumfahrzeug, das einen Brennstofftank 60, einen Oxidatortank 50 und eine Hilfseinheit aufweist. Die Hilfseinheit umfasst einen Hilfs-Oxidatortank 10, einen aus dem Hilfs-Oxidatortank gespeisten Hilfs-Gasgenerator 25 und eine an diesen angeschlossenen Hilfs-Turbine 26 und ist dazu eingerichtet, zumindest den Brennstofftank 60 hypergol, chemisch und/oder durch Verdampfung von Brennstoff mittels eines Wärmetauschers zu bedrücken.

Weiterhin offenbart sind ein Raumfahrzeug mit einem solchen Druckbeaufschlagungssystem und einer Hauptbrennkammer 1 und ein Verfahren eines Betriebs eines solchen Raumfahrzeugs.

### Bezugszeichen

- 1: Hauptbrennkammer
- 2: Düse
- 3: (Haupt-)Oxidator
- 4: (Haupt-)Brennstoff
- 5: (Haupt-)Pumpe für den Oxidator 3
- 6: (Haupt-)Pumpe für den Brennstoff 4
- 7: Gasraum des Oxidatortanks 50
- 8: Gasraum des Brennstofftanks 6010 Hilfs-Oxidatortank
- 11: Gasraum des Hilfs-Oxidatortanks 1012 Blase des Hilfs-Oxidatortanks 13(Hilfs-)Oxidator
- 14: Bedrückungsregeleinheit des Hilfs-Oxidatortanks
- 15: Tankbedrückungsregeleinheit des Oxidatortanks 50
- 15a: Oxidator-Gasgeneratorregeleinheit zur Brennstofftankbedrückung
- 15b: Oxidator-Gasgeneratorregeleinheit zur Oxidatortankbedrückung
- 16: Tankbedrückungsregeleinheit des Brennstofftanks 60
- 16a: Brennstoff-Gasgeneratorregeleinheit zur Bedrückung des Brennstofftanks 60
- 16b: Brennstoff-Gasgeneratorregeleinheit zur Bedrückung des Oxidatortanks 50
- 20: Hilfs-Pumpe
- 21: Hilfspumpenhauptventil
- 22: Hilfs-Gasgeneratorregelventil
- 23: Hauptventil der Steuerdüse 90
- 24: Hilfstankwiederaufladungs- und Hauptantriebsregelventil
- 25: Hilfs-Gasgenerator
- 26: Hilfs-Turbine
- 31: Oxidator-Triebwerkshauptventil
- 32: Brennstoff-Triebwerkshauptventil
- 33: Hilfsantrieb-Triebwerksventil
- 34: Brennstoff-AUX-Hauptventil (Zweistoff-Antrieb)
- 35: Oxidator-AUX-Hauptventil (Zweistoff-Antrieb)
- 40: Wärmetauscher
- 41: Heißgashauptventil
- 42: Verdampferhauptventil
- 50: Oxidatortank
- 60: Brennstofftank
- 71: dem Oxidatortank 50 vorgeschalteter Gasgenerator
- 72: dem Brennstofftank 60 vorgeschalteter Gasgenerator
- 80: Hilfstriebwerk
- 90: Steuerdüse

- 100, 200, 300, 400: Druckbeaufschlagungssystem

## Patentansprüche

1. Druckbeaufschlagungssystem (100, 200, 300, 400) für ein Raumfahrzeug, wobei das Druckbeaufschlagungssystem einen Brennstofftank (60), einen Oxidatortank (50) und eine Hilfseinheit umfasst, die einen Hilfs-Oxidatortank (10), einen aus dem Hilfs-Oxidatortank gespeisten Hilfs-Gasgenerator (25) und eine an diesen angeschlossenen Hilfs-Turbine (26) aufweist und dazu eingerichtet ist, den Brennstofftank (60) zu bedrücken, und zwar
- mittels Zuführung von Oxidator (13) aus dem Hilfs-Oxidatortank (10) zum Brennstofftank (60) als hypergole Bedrückung und/oder
- mittels Zuführung von Abgas des Hilfs-Gasgenerators (25) zu einem Wärmetauscher (40), Nutzung einer Temperatur des zugeführten Abgases im Wärmetauscher (40) zum Verdampfen von aus dem Brennstofftank (60) zugeleitetem flüssigem Brennstoff (4) und Rückführung des verdampften Brennstoffs zum Brennstofftank (60) und/oder
- mittels Zuführung von Abgas der Hilfs-Turbine (26) und von Brennstoff aus dem Brennstofftank zu einem dem Brennstofftank (60) vorgeschalteten Gasgenerator (72) sowie mittels Zuleitung von dessen Generatorgas zum Brennstofftank (60) als chemische Bedrückung.

2. Druckbeaufschlagungssystem gemäß Anspruch 1, wobei die Hilfseinheit dazu eingerichtet ist, zudem den Oxidatortank (50) zu bedrücken, und zwar
- mittels Zuführung von Abgas der Hilfs-Turbine (26) zum Oxidatortank (50) und/oder
- mittels Zuführung von Abgas der Hilfs-Turbine (26) und von Brennstoff aus dem Brennstofftank zum Oxidatortank (50) als hypergole Bedrückung und/oder
- mittels Zuführung von Abgas der Hilfs-Turbine (26) und von Brennstoff aus dem Brennstofftank (60) zu einem dem Oxidatortank (50) vorgeschalteten Gasgenerator (71) sowie mittels Zuleitung von dessen Generatorgas zum Oxidatortank (50) als chemische Bedrückung.

3. Druckbeaufschlagungssystem gemäß einem der vorhergehenden Ansprüche, wobei die Hilfseinheit dazu eingerichtet ist, den Hilfs-Oxidatortank (10)
- mittels zumindest eines Teils des Abgases der Hilfs-Turbine und/oder
- mittels eines vorbedrückten Lagergastanks (9) und/oder
- während einer Antriebsphase mit Oxidator aus dem Oxidatortank (50)
zu bedrücken.

4. Druckbeaufschlagungssystem gemäß einem der vorhergehenden Ansprüche, wobei die Hilfseinheit ferner dazu eingerichtet ist, zur Lageregelung des Raumfahrzeugs
- mindestens eine als Mono-Treibstoffdüse ausgebildete Steuerdüse (90) mit flüssigem Oxidator (3) aus dem Hilfs-Oxidatortank (10) zu speisen und/oder
- zumindest einen Teil des Abgases der Hilfs-Turbine einer in einem Mono-Treibstoffmodus zu betreibenden Hauptbrennkammer (1) des Raumfahrzeugs zuzuführen und danach mindestens ein als Zweistoffdüse ausgebildetes Hilfstriebwerk (80) mit Brennstoff (4) aus dem Brennstofftank und Oxidator aus dem Hilfs-Oxidatortank (10) zu betreiben.

5. Druckbeaufschlagungssystem gemäß einem der vorhergehenden Ansprüche, wobei
- der Hilfs-Oxidatortank (10) als Blasen- oder Membrantank ausgebildet ist und/oder
- wobei der Brennstofftank und/oder der Oxidatortank als Einkammertanks ausgebildet sind/ist.

6. Druckbeaufschlagungssystem gemäß einem der vorhergehenden Ansprüche, wobei der Hilfs-Oxidatortank (10) ein Tankvolumen aufweist, das höchstens ein Zehntel oder höchstens ein Fünfzigstel oder höchstens ein Hundertstel eines Tankvolumens des Brennstofftanks (60) und/oder eines Tankvolumens des Oxidatortanks (50) beträgt.

7. Raumfahrzeug mit einem Druckbeaufschlagungssystem (100, 200, 300, 400) gemäß einem der vorhergehenden Ansprüche sowie mit einer durch den Brennstofftank (60) und den Oxidatortank (50) des Druckbeaufschlagungssystems gespeisten Hauptbrennkammer (1).

8. Verfahren eines Betriebs eines Raumfahrzeugs, das ein Druckbeaufschlagungssystem (100, 200, 300, 400) gemäß einem der vorhergehenden Ansprüche aufweist, wobei das Verfahren ein Bedrücken des Brennstofftanks (60) und/oder des Oxidatortanks (50) des Druckbeaufschlagungssystems während mindestens einer Antriebsphase umfasst.
